# EUROPÄISCHE PATENTANMELDUNG

(11) **EP 3 076 278 A1**
(43) Veröffentlichungstag der Anmeldung: **05.10.2016**
(21) Anmeldenummer: 16163175.9
(22) Anmeldetag: 31.03.2016
(51) Int. Cl.: G06F 3/0484, G06F 3/0485

(54) **VERFAHREN ZUM DARSTELLEN VON OBJEKTEN ÜBER EIN MOBILES ELEKTRONISCHES GERÄT UND MOBILES ELEKTRONISCHES GERÄT**

(30) Priorität: 02.04.2015 DE 102015004358
(71) Anmelder: SITEC GmbH Sicherheitseinrichtungen und technische Geräte, 96369 Weißenbrunn (DE)
(72) Erfinder: HEINLEIN, Werner, 96317 Kronach (DE)
(74) Vertreter: Pröll, Jürgen

(57) **Zusammenfassung**

Es werden ein Verfahren zum Darstellen von Objekten (10) über ein mobiles elektronisches Gerät (12) und ein mobiles elektronisches Gerät (12) beschrieben, wobei das mobile elektronische Gerät (12) mindestens eine Anzeigeeinheit (14), eine Hauptrecheneinheit, eine Speichereinrichtung und eine Erfassungseinrichtung aufweist. Über die Anzeigeeinheit (14) wird ein Bereich eines Objektes (10) in einer vergrößerten Darstellung dargestellt wird, wobei die vergrößerte Darstellung des dargestellten Objekts (10) größer als die Darstellungsfläche der Anzeigeeinheit (14) ist. Über die Erfassungseinrichtung wird ein Bedienbefehl erfasst, der eine Richtung angibt. Der Bedienbefehl wird an die Hauptsteuereinheit übermittelt welche aus dem Bedienbefehl einen Änderungswunsch für eine Änderung des über die Anzeigeeinheit (14) dargestellten Bereichs des Objekts (10) ermittelt. Nach Maßgabe der erfassten Richtung erfolgt eine Änderung des über die Anzeigeeinheit (14) dargestellten Bereichs des Objekts (10), wobei der Bereich des Objektes (10) über die Anzeigeeinheit (14) dargestellt wird, welcher sich in Bezug auf eine vorherige, dargestellte Position des Objekts (10) in der erfassten Richtung befindet.

## Beschreibung

Es werden ein Verfahren zum Darstellen von Objekten über ein mobiles elektronisches Gerät und ein mobiles elektronisches Gerät beschrieben. Mobile elektronische Geräte sind bspw. Smartphones, PDAs, Mobiltelefone, Tablet-Computer und Laptops etc. Mobile elektronische Geräte werden auch als "mobile device", "handheld device" oder "portable electronic device" bezeichnet.

### Stand der Technik

Mobile Geräte, wie z.B. Smartphones, haben aufgrund von Mobilitätsanforderungen nur ein begrenzt großes Display. Wenn bspw. ein großes Gemälde oder ein Bild, z.B. im Maßstab 1:1, dargestellt werden soll, muss mittels Wischbewegung oder Verwendung von Scroll-Leisten das Bild in seiner Position verschoben werden. Darüber hinaus ist es bekannt, mit Hilfe des Daumens und des Zeigefingers einer Bedienperson eine Darstellung durch Vergrößern des Abstands zwischen Daumen und Zeigefingers, die während der gesamten Bewegung mit der Bedienoberfläche eines sog. Touch-Displays in Kontakt stehen müssen, die Größe des dargestellten Bereichs zu vergrößern. Wird der Abstand zwischen Zeigefinger und Daumen verkleinert erfolgt eine Verkleinerung des dargestellten Bereichs.

### Nachteile des Stands der Technik

Aufgrund dieser Bedienung über Wischbewegungen, Scroll-Leisten-Navigation oder dem Heran-Zoomen über die Finger einer Bedienperson geht sehr schnell der echte Größenbezug oder der Positionsbezug in einem Bild verloren.

Weiterhin ist es z.B. beim Lesen größerer Text-Dokumente sehr unbequem und umständlich, ständig zu scrollen oder zu wischen, damit man zur gewünschten Textstelle kommt. Es können bei einem normalgroßen Smartphone-Display nur wenige Worte pro Zeile dargestellt werden, damit diese auch noch gut lesbar sind. Personen mit Sehbehinderung können solche mobilen Geräte nicht sinnvoll zum Lesen verwenden. Es ist daher auch nur sehr schwierig, eine Online-Zeitung auf einem Smartphone zu lesen.

### Aufgabe

Es ist daher Aufgabe, die Nachteile des Stands der Technik zu beheben und eine einfache und intuitive Darstellung von Objekten über ein mobiles elektronisches Gerät anzugeben, welches eine beschränkte Darstellungsfläche aufweist. Es ist zudem Aufgabe, den Nachteil bekannter mobiler elektronischer Geräte, dass diese nur eine kleine Anzeigefläche aufweisen, durch ein Bedienkonzept so auszugleichen, dass auch größere Objekte (Bilder, Texte, usw.) dargestellt und angezeigt werden können und dem Benutzer auch ein sehr gutes Empfinden der realen Größe vermitteln.

### Lösung

Die Aufgabe wird durch ein Verfahren mit den in Anspruch 1 angegebenen technischen Merkmalen und durch ein mobiles elektronisches Gerät mit den in Anspruch 10 angegebenen technischen Merkmalen gelöst. Vorteilhafte Weiterbildungen sind in den Unteransprüchen im Detail angegeben.

Bei einem Verfahren zum Darstellen von Objekten über ein mobiles elektronisches Gerät, welches die vorstehend genannte Aufgabe löst, wobei das mobile elektronische Gerät mindestens eine Anzeigeeinheit, eine Hauptrecheneinheit, eine Speichereinrichtung und eine Erfassungseinrichtung aufweist und dazu ausgebildet ist, Objekte grafisch über die Anzeigeeinheit darzustellen,
- wird über die Anzeigeeinheit ein Bereich eines Objektes in einer vergrößerten Darstellung dargestellt, wobei die vergrößerte Darstellung des dargestellten Objekts größer als die Darstellungsfläche der Anzeigeeinheit ist,
- wird über die Erfassungseinrichtung ein Bedienbefehl erfasst, wobei der Bedienbefehl eine Richtung angibt,
- wird der Bedienbefehl an die Hauptsteuereinheit übermittelt, welche aus dem Bedienbefehl einen Änderungswunsch für eine Änderung des über die Anzeigeeinheit dargestellten Bereichs des Objekts ermittelt,
- berechnet die Hauptsteuereinheit nach Maßgabe der erfassten Richtung eine Änderung des über die Anzeigeeinheit dargestellten Bereichs des Objekts, und
- wird der Bereich des Objektes über die Anzeigeeinheit dargestellt, welcher sich in Bezug auf eine vorherige, dargestellte Position des Objekts in der erfassten Richtung befindet.

Das Verfahren zeichnet sich dadurch aus, dass keine Betätigung von Scroll-Leisten, kein Wischen und kein Zoomen über die Finger und ein zusätzliches Verschieben einer gezoomten Ansicht notwendig sind, um bspw. einen Text zu lesen. Der Bedienbefehl kann durch eine Vielzahl von Aktionen und Bewegungen umgesetzt werden. Nach dem Aufrufen eines Objekts kann dieses sofort in einer vergrößerten Darstellung angezeigt werden. Anschließend kann eine Bedienperson bspw. allein durch Bewegen des mobilen elektronischen Geräts zu einer gewünschten Position des Objekts gelangen, wobei durch das Bewegen des mobilen elektronischen Geräts ein Weitergehen des dargestellten Bereichs des Objekts erfolgt. In weiteren nachfolgend noch näher beschriebenen Varianten kann bspw. auch eine Gesteneingabe eine Änderung des dargestellten vergrößerten Bereichs des Objekts erfolgen. Objekte können graphische Darstellungen wie Bilder oder Videos, Text-Dokumente, E-Mails, Nachrichten, Informationsansichten, Ansichten einer Tabellenkalkulationsanwendung, einer Präsentation, Darstellungen einer Straßenkarte eines Navigationsprogramms, Spielanzeigen usw. sein.

Der Grad der Vergrößerung des dargestellten Bereichs des Objekts kann verändert werden. Dies kann bspw. durch einen weiteren Bedienbefehl erfolgen. Es kann aber auch eine andere Methode hierzu verwendet werden. Bspw. kann die Vergrößerung als Standard hinterlegt sein und durch eine Bedienperson verändert werden.

Das Objekt kann sich in einer Ebene erstrecken und eine seitliche Verlagerung des mobilen elektronischen Geräts kann eine seitliche Verlagerung des dargestellten Bereichs des Objekts bewirken und der dargestellte Bereich des Objekts kann der Bewegung des mobilen elektronischen Geräts folgen. In einer solchen Ausführung erfolgen das Darstellen von vergrößerten Bereichen des über die Anzeigeeinheit dargestellten Objekts und die Änderung des dargestellten Bereichs durch ein Bewegen des mobilen elektronischen Geräts. Bspw. kann beim Aufrufen eines Objekts als Startposition die Mitte, ein linker oberer Bildrand oder ein anderer Bereich dargestellt werden. Die Startansicht bzw. Startposition kann durch eine Bedienperson auch geändert werden und/oder für verschiedene Objekte unterschiedlich sein. Bspw. werden Bilder stets mit einer Startposition in der Mitte und Textdokumente in Abhängigkeit der Schrift stets mit einer Startposition am rechten oder linken oberen Bildrand dargestellt.

Eine Verlagerung des mobilen elektronischen Geräts orthogonal zur Ebene, in welcher sich das Objekt erstreckt, kann eine Vergrößerung oder eine Verkleinerung des dargestellten Bereichs des Objekts in Abhängigkeit der Richtung, in welche die Verlagerung orthogonal zur Ebene erfolgt, bewirken. Dies ermöglicht eine weitere einfache Bedienung bzw. Darstellung, da eine Bedienperson intuitiv die Anzeigeeinheit eines mobilen elektronischen Geräts näher zu seinen Augen hinführt, weil die Bedienperson die Anzeige schlecht sieht oder ein Detail näher betrachten will. Bei einer solchen Bewegung wird automatisch der dargestellte Bereich des Objekts vergrößert. Bewegt die Bedienperson das mobile elektronische Gerät wieder zurück in seine Ausgangsposition oder darüber hinaus wird die Darstellung des Bereichs verkleinert.

Die Änderung des über die Anzeigeeinheit dargestellten Bereichs des Objekts kann in der gleichen Geschwindigkeit erfolgen, in welcher der Bedienbefehl erfasst oder ausgeführt wird. Es erfolgt eine Änderung der Anzeige in Echtzeit, wodurch die Bedienperson den Eindruck hat, als würde sie mit einer Lupe über ein Objekt fahren und immer den Bereich vergrößert dargestellt bekommen, der unterhalb oder hinter seinem mobilen elektronischen Gerät liegt.

Es kann keine Änderung des über die Anzeigeeinheit dargestellten Bereichs des Objekts erfolgen, wenn ein Haltebefehl über die Erfassungseinrichtung erfasst und an die Hauptsteuereinheit übermittelt wird. Bspw. kann eine Bedienperson eine bestimmte Taste oder einen Bereich mit einer speziellen Funktion auf der Anzeigeeinheit berühren. Solange die Berührung aufrechterhalten wird oder vor einer nochmaligen Berührung zum Aufheben dieses Befehls, kann das mobile elektronische Gerät bewegt werden, ohne dass es zu einer Änderung des dargestellten Bereichs kommt.

Es kann eine Änderung des über die Anzeigeeinheit dargestellten Bereichs des Objekts nur dann erfolgen, wenn zusätzlich zu einem Bedienbefehl ein zweiter Bedienbefehl über die Erfassungseinrichtung erfasst und an die Hauptsteuereinheit übermittelt wird. In alternativen Ausführungen kann eine Änderung des dargestellten Bereichs nur dann erfolgen, wenn bspw. eine Taste oder ein Bereich mit einer speziellen Funktion auf der Anzeigeeinheit berührt wird.

Der Grad der Vergrößerung des dargestellten Bereichs des Objekts kann der tatsächlichen Größe des Objekts entsprechen, wobei der Bereich bspw. stets in der tatsächlichen Größe des Objekts dargestellt wird. Dies kann bspw. immer durch Aufrufen des Objekts ausgelöst werden. Anschließend kann auch eine Änderung der Größe der Darstellung erfolgen.

Ein Bedienbefehl kann durch mindestens eine Geste, eine Berührung oder eine Augenbewegung einer Bedienperson, eine Bewegung des mobilen elektronischen Geräts oder eine akustische Eingabe einer Bedienperson ausgelöst werden.

Die vorstehend genannte Aufgabe wird auch durch ein mobiles elektronisches Gerät gelöst, welches mindestens eine Anzeigeeinheit, eine Hauptrecheneinheit, eine Speichereinrichtung und eine Erfassungseinrichtung aufweist, wobei das mobile elektronische Gerät dazu ausgebildet ist, eines der vorstehend beschriebenen Verfahren auszuführen.

Die Erfassungseinrichtung kann mindestens einen Sensor aufweisen.

Der mindestens eine Sensor kann ein Lagesensor, ein Bildsensor, ein akustischer Sensor und/oder ein Beschleunigungssensor sein.

Die Anzeigeeinheit kann ein Bildschirm, ein Display oder ein Touch-Display mit einer berührungsempfindlichen Oberfläche sein.

Die Erfassungseinrichtung kann mit der berührungsempfindlichen Oberfläche des Touch-Displays gekoppelt sein.

Wenn z.B. von einem Bild die reale Größe bekannt ist, und die Daten davon, z.B. Bildformat, sind auf dem mobilen elektronischen Gerät (z.B. Smartphone) hinterlegt, dann kann dieses Bild auf einem Display des Smartphones beliebig in seiner Größe so verändert werden, dass es auf dem Smartphone-Display im Maßstab 1:1 (Originalgröße) angezeigt wird. Es wirkt dann so, als ob genau ein Ausschnitt des Originals in realer Größe auf dem Display zu sehen ist. Die dargestellte Größe kann aber auch beliebig anders (größer oder kleiner) gewählt werden.

Bei herkömmlichen Smartphones würde ein Verschieben des Smartphones nach irgendeiner Seite nichts an einem vergrößert dargestellten Bildausschnitt ändern, d.h. es würde immer der gleiche Bildausschnitt dargestellt werden. Mit dem hierin beschrieben neuen Art der Darstellung und Betrachtung bleibt jedoch das gesamte Bild bzw. Objekt, aus dem nur ein kleiner Ausschnitt auf einer Anzeigeeinheit (z.B. Display) zu sehen ist, virtuell fest an dieser Position in der Ebene oder im Raum stehen und man verändert den aktuell dargestellten Bildausschnitt. Bewegt man z.B. ein Smartphone langsam nach oben, so wandert der vorher gezeigte Bildausschnitt auf dem Display in gleicher Geschwindigkeit nach oben oder nach unten und vermittelt so den Eindruck, als ob das gesamte Bild starr am vorher definierten Ort fixiert wäre. Der Eindruck auf einen Betrachter bzw. auf die Bedienperson ist in etwa so, als ob der Betrachter bzw. die Bedienperson durch eine beliebig verschiebbare Schablone hindurch, ein an einer Wand hängendes Bild anschauen würde. Je nach verwendeter Technik ist es möglich, dass auch bei schnellen Wackelbewegungen mit einem mobilen elektronischen Gerät (z.B. Smartphone), oder gar Zittern, das dargestellte Bild auf dem mobilen elektronischen Gerät (Smartphone) absolut ruhig stehen zu bleiben scheint. Dieser Nebeneffekt würde es auch Personen, die sehr stark zittern, ermöglichen, auf mobilen elektronischen Geräten, wie z.B. Smartphones, eine Online-Zeitung zu lesen, oder ein Foto genau zu betrachten, obwohl sie das mobile elektronische Gerät in der unruhigen Hand halten.

Zum Erkennen, der mit dem mobilen elektronischen Gerät (z.B. Smartphone) ausgeführten Bewegung, dienen verschiedene Arten von Sensoren, wie z.B. Lagesensoren, Beschleunigungssensoren, Ortssensoren, Bildsensoren (z.B. Kamera), akustische Sensoren und /oder Gyroskopsensoren. Entweder einer dieser Sensoren oder mehrere davon, oder eine Kombination aus verschiedenen Sensoren der gleichen oder unterschiedlicher Art, können hierzu verwendet werden.

Zusätzlich kann zur besseren Bedienbarkeit der Einsatz von zusätzlichen Tasten (z.B. echte Tasten, oder sog. Softkey-Tasten, oder Touchfelder auf einer berührungsempfindlichen Anzeigeeinheit - Touchscreen) herangezogen werden. Bspw. kann mit dem Einsatz einer "Fang"-Taste das virtuelle Bild zeitweilig zum mobilen elektronischen Gerät (z.B. Smartphone) fixiert werden, d.h. bei Bewegung des mobilen elektronischen Geräts bleibt der momentan gezeigte Bereich unverändert. Dies kann z.B. dazu genutzt werden, um die momentane Lage oder Position des zu betrachtenden Bildes im Raum zu ändern (bei Betätigen der "Fang"-Taste und gleichzeitiges Bewegen des mobilen elektronischen Geräts nach oben, wird das gesamte virtuelle Bild mit nach oben geschoben). Es ist ebenfalls möglich, diese "Fang"-Taste als invertierte "Fang"-Taste einzustellen bzw. zu verwenden. Dies bedeutet, wird die Taste nicht betätigt und das mobile elektronische Gerät (z.B. Smartphone) wird verschoben, dann verschiebt sich auch das komplette virtuelle Bild mit, d.h. der dargestellte Bildausschnitt auf dem Display bleibt gleich.

Weiterhin kann auch durch Bewegen des mobilen elektronischen Geräts (z.B. Smartphone) senkrecht zur Bildschirmebene, weiter ins Bild hineingezoomt werden, oder in umgekehrter Richtung herausgezoomt werden. Die Zoomrichtung bei der jeweiligen Bewegungsrichtung kann positiv oder negativ sein, d.h. bei der einen Einstellung wird ins Bild hineingezoomt, sobald das mobile elektronische Gerät von einer Bedienperson oder Betrachter weg bewegt wird, und herausgezoomt, sobald das mobile elektronische Gerät wieder in Richtung zu der Bedienperson oder dem Betrachter hin bewegt wird. Bei der anderen Einstellung erfolgt das Zoomen umgekehrt. Auch diese Funktionen können über Tasten (z.B. echte Tasten, oder sog. Softkey-Tasten, oder Touchfelder auf einem Touchscreen) aktiviert werden, oder auch nicht.

Anstelle einer Taste-Bedienung kann auch z.B. eine Gesten- oder Spracheingabe ausgeführt werden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:

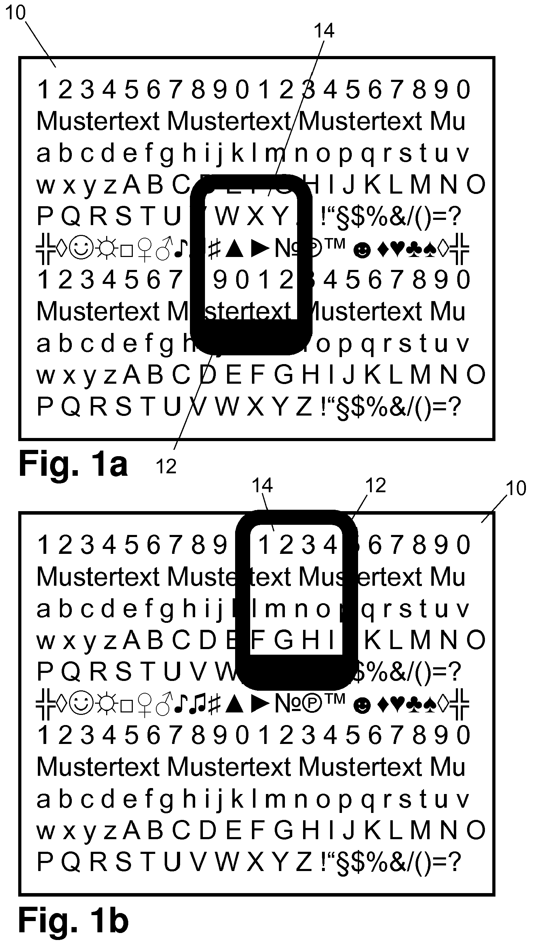

- Fig. 1a: eine schematische Darstellung eines Objekts und eines mobilen elektronischen Geräts in einer ersten Position; und
- Fig. 1b: eine schematische Darstellung eines Objekts und eines mobilen elektronischen Geräts in einer zweiten Position.

In den Figuren mit gleichen Bezugszeichen versehene Teile entsprechen im Wesentlichen einander, sofern nichts anderes angegeben wird. Darüber hinaus wird darauf verzichtet Bestandteile und Verfahrensschritte zu beschreiben, welche nicht wesentlich zum Verständnis der hierin offenbarten technischen Lehre sind.

Fig. 1a zeigt eine Darstellung eines Objektes 10 und eines mobilen elektronischen Gerätes 12 in einer ersten Position. Das mobile elektronische Gerät 10 ist beispielsweise ein sogenanntes Smartphone und weist eine Anzeigeeinheit 14 sowie nicht dargestellte weitere Komponenten auf. Die Komponenten umfassen nicht abschließend eine Hauptrecheneinheit, eine Erfassungseinrichtung zum Erfassen von Gesteneingaben und Bewegungen zur Änderung des dargestellten Bereichs eines Objektes 10, einen Speicher, eine Kamera, ein Mikrofon, eine Energieversorgungseinheit, beispielsweise in Form eines wieder aufladbaren Akkumulators, ein Gehäuse und weitere nicht beschriebene Komponenten.

Das in Fig. 1a dargestellte Objekt 10 weist eine Vielzahl von Zeichen und Symbolen auf, die einen beliebigen Inhalt repräsentieren sollen. Bei der Darstellung des Objekts 10 wird nicht das gesamte Objekt 10 auf die Größe der Anzeigeeinheit 14 des mobilen elektronischen Gerätes 12 angepasst und in einer verkleinerten Anzeige dargestellt, sondern es wird das Objekt 10 in seiner tatsächlichen Größe generiert und nur ein Bereich des Objekts 10 dargestellt. Beispielsweise wird beim Aufrufen eines Objektes 10 der mittlere Bereich, wie in Fig. 1a dargestellt, gezeigt. Möchte nun eine Bedienperson die weiteren Bereiche des Objektes 10 betrachten, so bewegt die Bedienperson das mobile elektronische Gerät 12 in eine bestimmte Richtung, wobei ein virtuelles Verfahren über das Objekt 10 erfolgt. Nach einer Verlagerung des mobilen elektronischen Gerätes 12 nach oben und nach rechts wird der in Fig. 1b gezeigte Bereich des Objektes 10 dargestellt. Es ist damit möglich, die Bereiche des Objektes 10 in einer realen Größe oder einer anderen Größe, die von einer Bedienperson eingestellt und auch verändert werden kann, darzustellen und ohne ein Verschieben oder ein Scrollen die dargestellten Bereiche des Objekts 10 in Echtzeit zu ändern.

Alternativ zu einem Bewegen des mobilen elektronischen Gerätes 12 über das virtuelle Objekt 10 hinweg kann auch eine Gesteneingabe als Bedienbefehl zum Bewegen bzw. Ändern des dargestellten Bereichs des Objektes 10 durchgeführt werden. Beispielsweise kann eine Bedienperson mit einer Handfläche oder einem Finger eine Bewegung von rechts nach links beabstandet zu dem mobilen elektronischen Gerät 12 durchführen, d.h. er berührt mit der Hand oder dem Finger das mobile elektronische Gerät nicht, wobei die Kamera diese Bewegung erfasst und an die Erfassungseinrichtung überträgt. Die Erfassungseinrichtung übermittelt die Bewegung an die Hauptsteuereinheit, welche die Bewegung und die daraus resultierende Richtung in eine Änderung des dargestellten Bereichs des Objekts 10 übersetzt und eine geänderte Anzeige auf der Anzeigeeinheit 14 bewirkt. Dies kann in Echtzeit erfolgen, sodass beispielsweise ein langsames oder schnelles Verfahren mit sich kontinuierlich ändernden dargestellten Bereichen des Objektes 10 erfolgt.

Die Bedienperson hat dabei den Eindruck mit einer Lupe über ein virtuelles Objekt 10 zu verfahren, wobei tatsächlich immer ein Bereich des Objektes 10 in einer vergrößerten Darstellung gezeigt wird. Hierzu wird beim Aufrufen des Objektes 10 eine Startposition definiert. Die Startposition befindet sich beispielsweise in der Mitte des Objekts 10, wie in Fig. 1a dargestellt. Die Lage des mobilen elektronischen Gerätes 12 ist ebenfalls bekannt und wird dann dazu verwendet, eine Änderung der Anzeige bzw. des dargestellten Bereichs des Objektes 10 zu erkennen und über die Anzeigeeinheit 14 darzustellen. Hierzu befindet sich das Objekt 10 in einer virtuellen Anordnung in einem festen räumlichen Bezug zu dem mobilen elektronischen Geräts 12. Wird das mobile elektronische Gerät 12 bewegt, wird dies über entsprechende Sensoren erkannt und es erfolgt eine gedachte Bewegung des mobilen elektronischen Gerätes 12 über das Objekt 10 hinweg. Die Sensoren können über eine Kamera, eine berührungsempfindliche Bedienoberfläche der Anzeigeeinheit 14, oder Sensoren zur Positionsbestimmung des mobilen elektronischen Gerätes 12 und deren Lage und Ausrichtung gebildet und realisiert werden. Es können auch mindestens zwei verschiedene Sensoren oder Sensorarten verwendet werden, um einen einzelnen Bedienbefehl zur Änderung der Anzeige bzw. des dargestellten Bereichs des Objekts 10 durchzuführen.

In weiteren Ausführungsformen sind zwei Bedienbefehle erforderlich, damit eine Änderung des dargestellten Bereichs des Objektes 10 erfolgt. Dies dient dazu, dass ein unabsichtliches Bewegen oder ein Bewegen aus anderen Gründen nicht zu einer Änderung des dargestellten Bereichs des Objektes 10 führt. Beispielsweise verfährt eine Bedienperson mit seinem mobilen elektronischen Gerät 12 an eine bestimmte Position eines Objektes 10 und möchte diese Ansicht einer weiteren Person zeigen. Würde die Bedienperson nun das mobile elektronische Gerät 12 bewegen, würde sich die Ansicht ändern. Falls die Bedienperson jedoch zum Ändern des dargestellten Bereichs des Objektes 10 eine entsprechende Bewegungstaste drückt und hält die Bedienperson diese weiterhin gedrückt, kann ein Bewegen erfolgen. Lässt er die Bewegungstaste los, ist der dargestellte Bereich fest und wird auch bei einer Bewegung des mobilen elektronischen Gerätes 12 nicht mehr verändert. In weiteren Ausführungsformen kann auch ein dargestellter Bereich des Objektes 10 durch Betätigen und gedrückt halten einer Taste beibehalten werden, auch dann, wenn das mobile elektronische Gerät 12 bewegt wird.

In weiteren Ausführungsformen kann eine Änderung des dargestellten Bereichs des Objekts 10 nur dann erfolgen, wenn das mobile elektronische Gerät 12 bewegt wird und die Augen einer Bedienperson in die gleiche Richtung zeigen. Als Bedienbefehle werden beispielsweise dann die Informationen von einer Kamera und die Informationen von einem Lage- bzw. Positionssensor verwendet, um ein Bewegen zu erkennen und auch eine Änderung der Anzeige durch die Hauptsteuereinheit zuzulassen.

In weiteren Ausführungsformen kann die Bedienperson das mobile elektronische Gerät 12 orthogonal zur Ebene des Objektes 10 in das Objekt 10 hinein- oder herausbewegen, wodurch eine Vergrößerung des über die Anzeigeeinheit 14 dargestellten Bereichs oder eine Verkleinerung des über die Anzeigeeinheit 14 dargestellten Bereichs erfolgt. Auch hierbei ist die Position des mobilen elektronischen Gerätes 12 wichtig. In weiteren Ausführungsformen kann die Position des virtuellen Objektes 10 ortsfest festgelegt werden. Die Position des mobilen elektronischen Gerätes 12 zu dem virtuellen Objekt 10 definiert dann, in welcher Größe und welcher Bereich des Objekts 10 dargestellt werden. Bei diesen Ausführungen kann auch immer dann eine Startposition wieder eingenommen werden, wenn beispielsweise der Abstand zwischen einem virtuellen Objekt 10 und dem mobilen elektronischen Gerät 12 einen bestimmten Maximalabstand überschreitet oder einen Minimalabstand unterschreitet. Ein Maximalabstand kann beispielsweise 30 cm oder 1 m betragen und eine Minimalabstand wenige Millimeter. In weiteren Ausführungsformen kann das mobile elektronische Gerät 12 auch hinter das Objekt 10 bewegt werden, wobei dann der Minimalabstand mit einem negativen Vorzeichen in Bezug auf die Position des Objektes 10 ebenfalls einen Minimalabstand von 30 cm oder von 10 cm aufweisen kann.

Grundsätzlich sind die Maximal- und Minimalabstände frei wählbar und können auch von einer Bedienperson verändert werden. Auch Startansichten beim Aufrufen bzw. Öffnen eines Objekts 10 können von einer Bedienperson festgelegt und verändert werden.

Wie in den Fig. 1a und 1b dargestellt, kann durch die hierin beschriebenen Verfahren ein einfaches Lesen von beispielsweise Textdokumenten erreicht werden. Hierzu ruft eine Bedienperson über ein entsprechendes Menü seines mobilen elektronischen Gerätes 12 bspw. eine Onlinezeitung auf und wählt einen Artikel aus. Bei einem herkömmlichen mobilen elektronischen Gerät würde der Artikel derart verkleinert dargestellt werden, dass auch bei einer mobilen Ansicht der Text schwer lesbar ist. Bei dem hierin beschriebenen Verfahren und mit dem hierin beschriebenen mobilen elektronischen Gerät 12 wird nach dem Aufrufen des Artikels jedoch ein vergrößerter Bereich des durch den Artikel definierten Objektes 10 dargestellt. Beispielsweise ist für solche Texte als Startposition der linke obere Rand definiert. Die Bedienperson kann anschließend sein mobiles elektronisches Gerät 12 in der gewünschten Weise nach rechts bewegen und kann dem Text des Artikels folgen. Hat er eine Zeile des Artikels fertig gelesen, so kann er das mobile elektronische Gerät 12 wieder nach links zurück bewegen, um ein Weiterlesen in der nächsten Zeile durchzuführen. Um eine größere Breite der Zeile anzuzeigen, kann die Bedienperson das mobile elektronische Gerät 12 auch um 90 Grad drehen, sodass das Objekt 10 im Breitbildmodus angezeigt wird. Damit nicht auch das Objekt 10 verschwenkt wird, kann die Position des virtuellen Objektes 10, dass in einem Speicher das mobilen elektronischen Gerätes 12 hinterlegt ist, in Abhängigkeit von Signalen eines Positions- oder Lagesensors stets so ausgerichtet bleiben, dass eine üblich Ausrichtung von oben nach unten beibehalten wird, selbst dann, wenn das mobile elektronische Gerät 12 verschwenkt wird.

Bei dem vorhergehend beschriebenen Beispiel, bei welchem die Bedienperson einen Artikel einer Onlinezeitung liest, kann die Bedienperson auch beispielsweise ein in dem Text integriertes Bild, welches verkleinert dargestellt ist, vergrößern, indem er das mobile elektronische Gerät 12 in Position über das Bild bringt und das mobile elektronische Gerät 12 näher zu sich heranführt. Dies wird von den Sensoren des elektronischen Gerätes 12 und der Erfassungseinrichtung sowie der Hauptsteuereinheit als Bedienbefehl zum Vergrößern des dargestellten Bereichs des Objekts 10 erfasst, wodurch ein vergrößerter Bereich dargestellt wird. Solange der vergrößerte Abstand zwischen dem virtuellen Objekt 10 und dem mobilen elektronischen Gerät 12 besteht, erfolgt eine noch größere Darstellung von Bereichen des Objektes 10, auch dann, wenn die Bedienperson das mobile elektronische Gerät 12 nach rechts und links bewegt. Bewegt die Bedienperson das mobile elektronische Gerät 12 wieder zurück, das heißt von sich aus weiter weg, wird wieder die ursprüngliche Größe des Bereichs dargestellt.

Die Position des mobilen elektronischen Gerätes 12 und die virtuelle Anordnung des Objekts 10 bzw. deren Bezug zueinander in einem Koordinatensystem können verschiedenartig festgelegt werden.

Entscheidend bei den hierin beschriebenen Verfahren ist, dass eine vergrößerte Darstellung eines Bereichs eines Objekts 10 erzeugt wird und eine Gesteneingabe, eine Bewegung des mobilen elektronischen Gerätes 12 oder eine andere Bedieneingabe ein entsprechendes Ändern der dargestellten Bereiche des Objekts 10 bewirken. Hierdurch kann eine Bedienperson ohne mit seinen Fingern ein Heranzoomen durchführen zu müssen, ohne Scroll-Leisten zu bedienen und ohne ein Wischen oder Nachführen einer dargestellten Vergrößerung auszuführen, einfach bspw. eine Onlinezeitung lesen oder Bilder vergrößert betrachten.

## Patentansprüche

1. Verfahren zum Darstellen von Objekten (10) über ein mobiles elektronisches Gerät (12), wobei das mobile elektronische Gerät (12) mindestens eine Anzeigeeinheit (14), eine Hauptrecheneinheit, eine Speichereinrichtung und eine Erfassungseinrichtung aufweist und dazu ausgebildet ist, Objekte (10) grafisch über die Anzeigeeinheit (14) darzustellen, wobei
- über die Anzeigeeinheit (14) ein Bereich eines Objektes (10) in einer vergrößerten Darstellung dargestellt wird,
- die vergrößerte Darstellung des dargestellten Objekts (10) größer als die Darstellungsfläche der Anzeigeeinheit (14) ist,
- über die Erfassungseinrichtung ein Bedienbefehl erfasst wird, wobei der Bedienbefehl eine Richtung angibt,
- der Bedienbefehl an die Hauptsteuereinheit übermittelt wird, welche aus dem Bedienbefehl einen Änderungswunsch für eine Änderung des über die Anzeigeeinheit (14) dargestellten Bereichs des Objekts (10) ermittelt,
- die Hauptsteuereinheit nach Maßgabe der erfassten Richtung eine Änderung des über die Anzeigeeinheit (14) dargestellten Bereichs des Objekts (10) berechnet, und
- der Bereich des Objektes (10) über die Anzeigeeinheit (14) dargestellt wird, welcher sich in Bezug auf eine vorherige, dargestellte Position des Objekts (10) in der erfassten Richtung befindet.

2. Verfahren nach Anspruch 1, wobei der Grad der Vergrößerung des dargestellten Bereichs des Objekts (10) verändert werden kann.

3. Verfahren nach Anspruch 1 oder 2, wobei das Objekt (10) sich in einer Ebene erstreckt und eine seitliche Verlagerung des mobilen elektronischen Geräts (12) eine seitliche Verlagerung des dargestellten Bereichs des Objekts (10) bewirkt und der dargestellte Bereich des Objekts (10) der Bewegung des mobilen elektronischen Geräts (12) folgt.

4. Verfahren nach Anspruch 3, wobei eine Verlagerung des mobilen elektronischen Geräts (12) orthogonal zur Ebene, in welcher sich das Objekt (10) erstreckt, eine Vergrößerung oder eine Verkleinerung des dargestellten Bereichs des Objekts (10) in Abhängigkeit der Richtung, in welche die Verlagerung orthogonal zur Ebene erfolgt, bewirkt.

5. Verfahren nach einem der Ansprüche 1 bis 4, wobei die Änderung des über die Anzeigeeinheit (14) dargestellten Bereichs des Objekts (10) in der gleichen Geschwindigkeit erfolgt, in welcher der Bedienbefehl erfasst oder ausgeführt wird.

6. Verfahren nach einem der Ansprüche 1 bis 5, wobei keine Änderung des über die Anzeigeeinheit (14) dargestellten Bereichs des Objekts (10) erfolgt, wenn ein Haltebefehl über die Erfassungseinrichtung erfasst und an die Hauptsteuereinheit übermittelt wird.

7. Verfahren nach einem der Ansprüche 1 bis 6, wobei eine Änderung des über die Anzeigeeinheit (14) dargestellten Bereichs des Objekts (10) nur dann erfolgt, wenn zusätzlich zu einem Bedienbefehl ein zweiter Bedienbefehl über die Erfassungseinrichtung erfasst und an die Hauptsteuereinheit übermittelt wird.

8. Verfahren nach einem der Ansprüche 1 bis 7, wobei der Grad der Vergrößerung des dargestellten Bereichs des Objekts (10) der tatsächlichen Größe des Objekts (10) entspricht.

9. Verfahren nach einem der Ansprüche 1 bis 8, wobei ein Bedienbefehl durch mindestens eine Geste, eine Berührung oder eine Augenbewegung einer Bedienperson, eine Bewegung des mobilen elektronischen Geräts (12) oder eine akustische Eingabe einer Bedienperson ausgelöst wird.

10. Mobiles elektronisches Gerät mit mindestens einer Anzeigeeinheit (14), einer Hauptrecheneinheit, einer Speichereinrichtung und einer Erfassungseinrichtung, wobei das mobile elektronische Gerät (12) dazu ausgebildet ist, eines der Verfahren der Ansprüche 1 bis 9 auszuführen.

11. Mobiles elektronisches Gerät nach Anspruch 10, wobei die Erfassungseinrichtung mindestens einen Sensor aufweist.

12. Mobiles elektronisches Gerät nach Anspruch 11, wobei der mindestens eine Sensor ein Lagesensor, ein Bildsensor, ein akustischer Sensor und/oder ein Beschleunigungssensor ist.

13. Mobiles elektronisches Gerät nach einem der Ansprüche 10 bis 12, wobei die Anzeigeeinheit (12) ein Bildschirm, ein Display oder ein Touch-Display mit einer berührungsempfindlichen Oberfläche ist.

14. Mobiles elektronisches Gerät nach Anspruch 13, wobei die Erfassungseinrichtung mit der berührungsempfindlichen Oberfläche des Touch-Displays gekoppelt ist.
